# EUROPEAN PATENT APPLICATION

(11) **EP 2 512 003 A2**
(43) Date of publication of application: **17.10.2012**
(21) Application number: 11187585.2
(22) Date of filing: 02.11.2011
(51) Int. Cl.: H02J 9/00

(54) **Stand-by circuit for household appliances**

(30) Priority: 03.11.2010 IT TO20100876
(71) Applicant: Indesit Company S.p.A., 60044 Fabriano (AN) (IT)
(72) Inventor: Burzella, Luciano, 60044 Fabriano (AN) (IT)
(74) Representative: Dini, Roberto

(57) **Abstract**

The present invention relates to a stand-by circuit (1) comprising a first input (100) for receiving a phase of a mains supply, a second input (101) for receiving a stand-by signal, and an AC-DC converter (4), said circuit being characterized in that it comprises a bistable relay (3,30) connected between said first input (100) and an input of said AC-DC converter (4), wherein said bistable relay (30) disconnects said first input (100) electrically from said input of said AC-DC converter (4) when there is an active signal at said second input (101).

## Description

The present invention relates to the field of household appliances, and in particular to a stand-by circuit for household appliances, according to the preamble of claim 1.

The recent developments and lower costs of electronic components, along with the need of offering increasingly innovative products to customers, have led to the development of more and more sophisticated household appliances (e.g. ovens, washing machines, television sets, refrigerators, dishwashers).

Many household appliances on the market today utilize big displays that show information about the settings and operation of the appliance, or sensors that detect the operating state of the appliance or physical quantities which are useful or necessary for it to operate correctly.

The increasing use of on-board electronics has led household appliances to use much energy even when they are not operational, i.e. when they are not carrying out their main function, e.g. washing in the case of a washing machine.

Aiming at reducing this energy consumption, a stand-by state is known to be used wherein no power is supplied to a part of the on-board electronics, in particular sensors and video or luminous interfaces.

In the solutions known in the art, the system controlling the household appliance's stand-by state includes an electric switch arranged between the AC-DC converter, which transforms an alternating mains voltage into a direct supply voltage, and the on-board electronics. This switch is appropriately driven by a control unit, so that it breaks the electric connection between the direct voltage supply and the downstream electronic circuits when the household appliance enters the stand-by state.

In stand-by state some electronic components still receive power, such as, for example, the control unit, the AC-DC converter and the various filters of the machine.

This solution has the drawback that the energy consumption in stand-by, although much lower than in the operating state, is still far from being null, thus implying that some energy is still wasted.

In known household appliances, a control unit stores the state of the appliance into a nonvolatile memory. Following a blackout, the household appliance first resumes its operating state, so that power is supplied to the control unit, then the latter reads from the memory the state the system was in immediately prior to the blackout, and finally the household appliance resumes that state.

One drawback of this solution is that, if the household appliance was in the stand-by state, after the blackout it will resume operation in the operating state, and only afterwards will it switch again to stand-by. This implies a waste of energy.

It is one object of the present invention to improve the stand-by circuit solutions known in the art, in particular for applications in the household appliance industry.

This object is achieved through a stand-by circuit and a related household appliance incorporating the features set out in the appended claims, which are intended as an integral part of the present description.

The idea at the basis of the present invention consists of a stand-by circuit comprising a bistable relay connected between a first input of the circuit, adapted to receive a phase of the mains supply, and an input of an AC-DC converter. The bistable relay disconnects the AC-DC converter electrically from the mains supply when there is an active stand-by signal at a second input of the circuit.

The use of such a circuit allows to disconnect a considerable portion of the appliance's circuitry from the mains supply when the appliance is in stand-by state.

In this manner, the AC-DC converter and the downstream circuitry no longer receive any power, and the power consumption of the appliance in stand-by is close to 0 W.

Moreover, when a blackout occurs this circuit holds its state, so that when power is restored the circuit will resume operation in the same state it was in prior to the blackout. For example, if the circuit, and hence the household appliance, is in stand-by when a blackout occurs, when power is restored the circuit will reactivate in stand-by without first entering the operating state. This implies a considerable energy saving.

Advantageously, the bistable relay comprises two anti-phase driven switches , i.e. wherein the drive that closes one switch also opens the other switch. The first switch of the relay is placed between the alternating current mains and the AC-DC converter that supplies power to the on-board electronics. When a first control branch (hereafter referred to as set branch) of the relay is energized, the first switch connects the AC-DC converter to the mains supply; when a second control branch (hereafter referred to as reset branch) is energized, the first switch opens and disconnects the converter from the mains supply. The circuit comprises a wake-up branch connected between the mains supply and the ground. The second switch of the relay, a wake-up switch and the first control branch of the relay belong to the wake-up branch. The second switch of the relay closes when the second control branch is energized. The stand-by circuit further comprises a reset module that energizes the second control branch when there is an active stand-by signal at its input.

It is thus possible to wake up the household appliance from the stand-by state in a reliable and efficient manner.

Moreover, when a blackout occurs this circuit holds its state, so that when power is restored the circuit will resume operation in the same state it was in prior to the blackout. For example, if the circuit, and hence the household appliance, is in stand-by when a blackout occurs, when power is restored the circuit will reactivate in stand-by without first entering the operating state. This implies a considerable energy saving.

Advantageously, the bistable relay is of the SPDT (single pole double throw) type, and comprises two switches having one common terminal. This device is easily available on the market, is reliable, and is suited to withstanding the high currents required by household appliances.

Advantageously, the bistable relay is of the DPST (double pole single throw) type, and comprises two separate, anti-phase driven switches.

The idea at the basis of the present invention also includes a method for controlling a household appliance following a mains blackout, or more in general in the event of an appliance power failure. According to this method, immediately after the blackout the switch, and hence the household appliance, will resume the same state they were in prior to the blackout.

This method saves energy in the event of a blackout, because the household appliance in stand-by will become active again without first entering the operating state, which would result into a significantly higher energy consumption.

Further objects and advantages of the present invention will become more apparent from the following description of a preferred embodiment thereof, which is supplied by way of nonlimiting example with reference to the annexed drawings, wherein:
Fig. 1 is a block diagram of a stand-by circuit according to the present invention;
Fig. 2 is a circuit diagram of the stand-by circuit of Fig. 1;
Fig. 3 is a block diagram of a stand-by circuit according to a second embodiment;
Fig. 4 is a first circuit diagram of the stand-by circuit of Fig. 3;
Fig. 5 is a second circuit diagram of the stand-by circuit of Fig. 3;
Fig. 6 is a third circuit diagram of the stand-by circuit of Fig. 3;
Fig. 7 shows a circuit for reading the state of a wake-up switch used in the examples of Figs. 1-6;
Fig. 8 shows a washing machine which comprises a stand-by circuit according to the present invention.

In the present invention, identical or equivalent means will be designated by the same reference numerals.

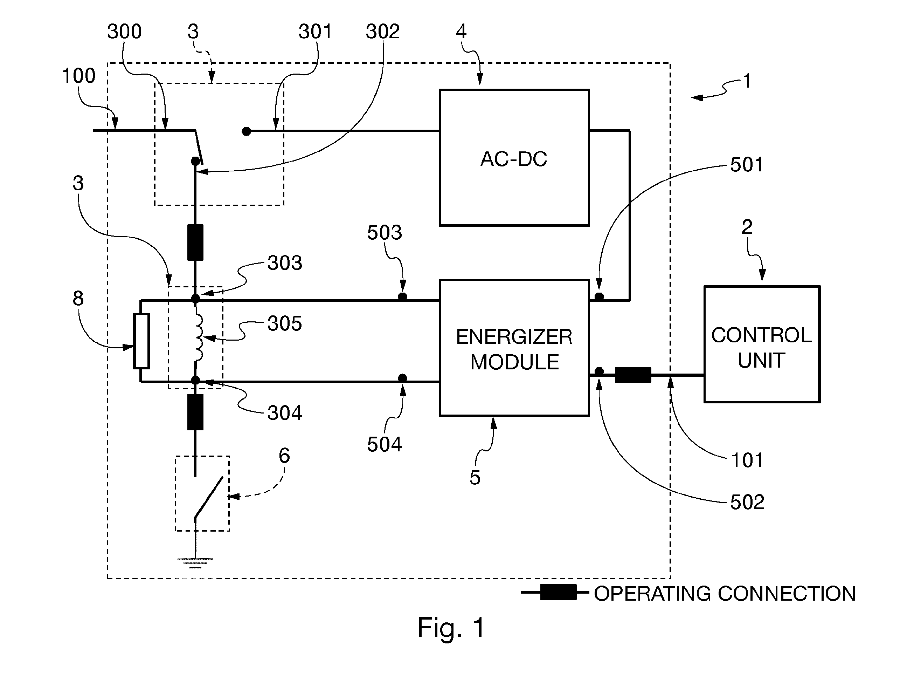

Referring now to Fig. 1, there is shown a block diagram of the stand-by circuit 1 connected to a microcontroller 2, e.g. a control unit controlling the operation of a household appliance, e.g. a washing machine.

The stand-by circuit 1 comprises a bistable relay 3, an AC-DC converter 4 that supplies power to the on-board electronics, a reset module 5, and a wake-up switch 6.

In general, the relay 3 comprises two anti-phase driven switches 309 and 310, i.e. when one is open the other is closed.

In Fig. 1, the two switches 309 and 310 of the relay 3 have one common terminal 300, said common terminal coinciding with a first input 100 of the stand-by circuit 1. The first input 100 receives a phase of the alternating supply voltage, typically 230 active Volts at 50 Hz.

When the relay 3 is energized through an adequate electric signal applied to a first control branch 305, referred to as set branch, the common terminal 300 of the relay 3 is short-circuited to a second terminal 301 of the relay 3, referred to as NO (Normally Open) terminal, by closing the first switch 309. The electric control signal may be a current or a voltage having particular form and amplitude characteristics.

In a dual manner, when the relay 3 is energized through an adequate electric signal applied to a second control branch 306, referred to as reset branch, the common terminal 300 of the relay 3 is short-circuited to a third terminal 302 of the relay 3, referred to as NC (Normally Closed) terminal, by closing the second switch 310.

It is clear that such a relay behaves like a switching device.

In particular, in the implementation shown in Fig. 1 the relay 3 is an SPDT (single pole double throw) bistable relay, which comprises a set branch 305 between a positive set terminal 303 and a negative set terminal 304, and a reset branch 306 between a positive reset terminal 307 and a negative reset terminal 308. It is known that an SPDT relay behaves like a switching device.

The relay is energized when an adequate energization current flows in one of the two control branches 305 and 306.

The expression "operationally connected devices" refers herein to two devices, whether or not directly connected to each other, such that an electric signal generated by one device affects an electric signal generated by the other device. The electric connection between the two devices may be a direct one, i.e. occurring through a short circuit, or it may be established through one or more third devices of any kind, e.g. resistors, capacitors, diodes, transistors, integrated circuits, etc.

The expression "connected devices" refers herein to a simple connection between two or more devices established through a short circuit, and therefore indicates a particular case of operationally connected devices.

The AC-DC converter 4 transforms the alternating mains voltage, when present at the converter input, into a direct voltage referring to the circuit's ground voltage. The circuit ground is operationally connected to the neutral terminal of the input alternating voltage. The direct voltage is the converter's operating output voltage. In a particular implementation of the present invention, the value of the operating voltage of the AC-DC converter 4 is 12V.

The AC-DC converter 4 may be any known converter, e.g. a linear or switching converter, and may also comprise auxiliary circuits, e.g. filters, in particular EMC filters, adapted to reduce the noise entering the household appliance from the power mains as well as any noise generated by the appliance itself, which would then be transferred to the power mains.

The reset module 5, which comprises an input terminal 501 and an output terminal 502, energizes the reset branch of the relay 306 when there is an active stand-by signal at the input 501.

The input terminal 501 of the reset module, coinciding with a second input 101 of the stand-by circuit 1, is operationally connected to an output of a control unit 2.

The output terminal 502 of the reset module 5 is operationally connected to a terminal of the reset branch 306, in particular to the negative reset terminal 308.

The positive reset terminal 307 is operationally connected to an output of the converter 4. The Normally Open terminal 301 of the relay is operationally connected to an input of the AC-DC converter 4. The positive set terminal 303 of the relay is operationally connected to the Normally Closed terminal 302 of the relay 3.

The negative set terminal 304 of the relay is operationally connected to a first terminal of the wake-up switch 6.

A second terminal of the wake-up switch 6 is connected to the circuit ground.

More in general, the second switch 302 of the relay 3, the wake-up switch 6 and the set branch 305 belong to the same wake-up branch 7 comprised between the first input of the stand-by circuit 100 and the ground.

As known, a branch comprises one or more bipoles connected in series.

Each element of the above-mentioned wake-up branch 7 is comprised in a bipole belonging to the wake-up branch 7.

The man skilled in the art may change the order of these elements within the wake-up branch 7.

The closing of the wake-up switch 6 while the circuit is in stand-by causes a current to flow through the wake-up branch 7, and therefore also through the set branch 305 of the relay 3. This current energizes the relay 3, which then switches and connects the converter 4 to the first input 100, thereby placing the circuit into the operating state.

In a preferred embodiment, the closing of the wake-up switch 6 is controlled by a push-button that can be operated by the user; if the push-button is not pressed, then the wake-up switch 6 is open.

When there is an active stand-by signal at the second input 101 of the stand-by circuit 1, at the output of the reset module 5 there is a low impedance that allows a current to flow from the output of the converter 4 to ground through the reset branch 306. This current energizes the relay 3, which then switches and disconnects the converter 4 from the first input of the stand-by circuit 100, thereby placing the circuit into the stand-by state.

In a particular embodiment, the stand-by signal is active at a high logic level, corresponding to an electric level of the signal typically equal to a direct voltage significantly higher than the ground voltage, such as a microcontroller power voltage, e.g. 3.3 V.

In a preferred embodiment, a first protection block 8 is connected in parallel to the set branch 305 of the relay 3. The protection block 8 limits the voltage difference across the set branch 305 to a predefined voltage such that the relay and/or the connected circuits cannot suffer any damage.

In another embodiment, a second protection block 9 is connected in parallel to the reset branch 306 of the relay 3. The protection block 9 limits the voltage difference across the reset branch 306 to a predefined voltage such that the relay and/or the connected circuits cannot suffer any damage.

In a particular embodiment, the stand-by circuit 1 comprises a fourth switch connected between the first input 100 of the stand-by circuit 1 and at least one resistive load. Preferably, the fourth switch 13 is operationally connected to the control unit 2, which controls the opening and/or closing thereof. Since the current drawn by the resistive load flows through the fourth switch, it is possible to use a smaller and hence cheaper relay 3, i.e. with lower maximum current specifications.

In a further embodiment, the positive set terminal 303 and the positive reset terminal 307 are connected to each other.

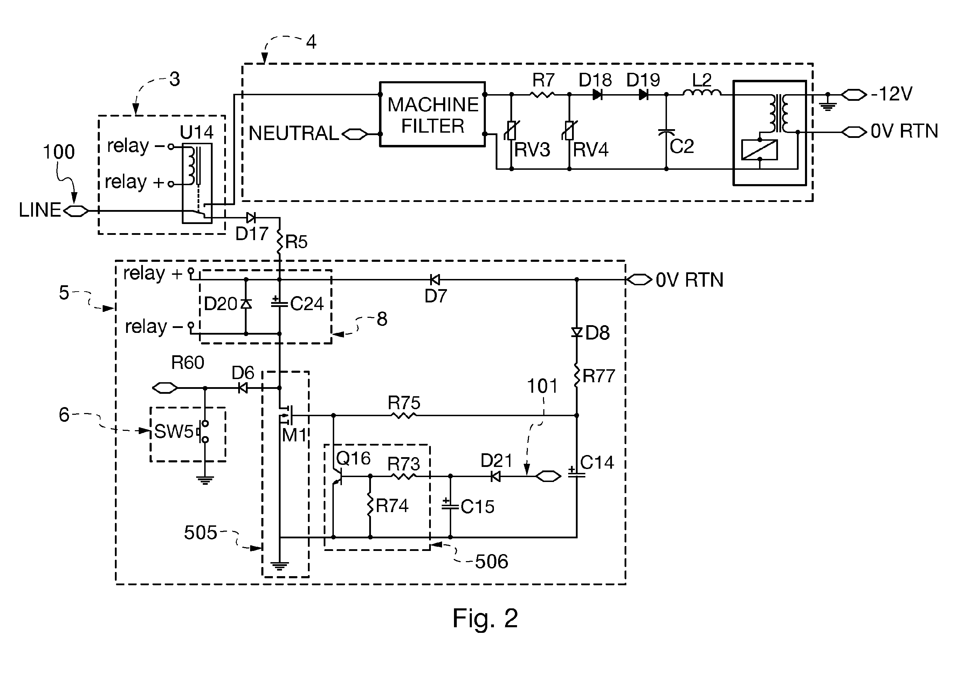

The example of Fig. 2 shows the complete circuit diagram that implements the stand-by circuit 1 of the block diagram of Fig. 1.

The Normally Open terminal 301 of the relay is connected to the input of the AC-DC converter 4.

The positive set terminal 303 of the relay 3 is operationally connected to the Normally Closed terminal 302 of the relay 3 through the series of a diode D29 and a resistor R46, with the cathode of the diode D29 directed towards the positive set terminal 303 of the relay 3.

The negative set terminal 304 of the relay is connected to the first terminal of the wake-up switch 6.

The output terminal 502 of the reset module 5 is connected to the negative reset terminal 308 of the relay 3.

The positive reset terminal 307 is connected to the positive set terminal 303 and is operationally connected to the output of the converter 4 through a diode D31, with the cathode of the diode D31 directed towards the positive reset terminal 307.

The reset module 5 is an inverting logic port of the open collector npn type, which comprises an npn BJT transistor Q21 in grounded emitter configuration. In particular, the input terminal 501 is operationally connected to the base of the transistor Q21 through a first resistor R31. The base of the transistor Q21 is also operationally connected to ground through a second resistor R45, and the collector of the transistor Q21 coincides with the output terminal of the reset module 502.

The protection block 8 comprises a capacitor C18 and a Zener diode D30 connected in parallel to each other; in particular, the cathode of the diode D30 is connected to the positive set terminal 303, whereas the anode is connected to the negative set terminal 304. Preferably, the diode D30 has a Zener voltage of 12 V.

The protection block 9 comprises a diode D22; in particular, the cathode of the diode D22 is connected to the positive set terminal 303, whereas the anode is connected to the negative set terminal 304.

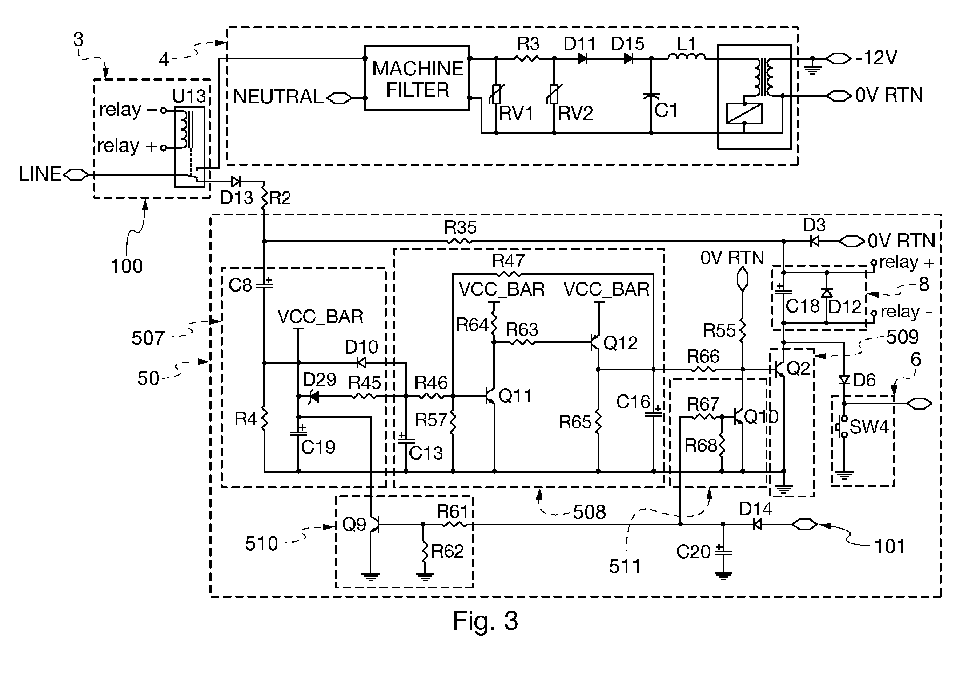

With reference to Fig. 3, in an embodiment which is alternative to the one shown in Figs. 1 and 2 the stand-by circuit 1 comprises a bistable relay 30 of the DPST (double pole single throw) type, which comprises two separate, anti-phase driven switches 309 and 310.

The first switch of the relay 309 is operationally connected between the first input of the stand-by circuit 100 and the input of the AC-DC converter 4. The closing of the first switch 309 of the relay 30 is driven by the energization of the set branch 305, whereas the opening thereof is driven by the energization of the reset branch 306.

The first input of the stand-by circuit 100 is operationally connected to the positive set terminal 303.

The second switch 310 of the relay 30 is operationally connected between the negative set terminal 304 and the wake-up switch 6. In general, the second switch of the relay 310 may be placed at any point of the wake-up branch 7, e.g. it may be operationally connected between the positive set terminal 303 and the first input 100 of the stand-by circuit 1. The opening of the second switch 310 of the relay 30 is driven by the energization of the set branch 305, whereas the closing thereof is driven by the energization of the reset branch 306.

The positive set terminal 303 and the positive reset terminal 307 may be short-circuited together.

The rest of the circuit is wholly similar to the one already described.

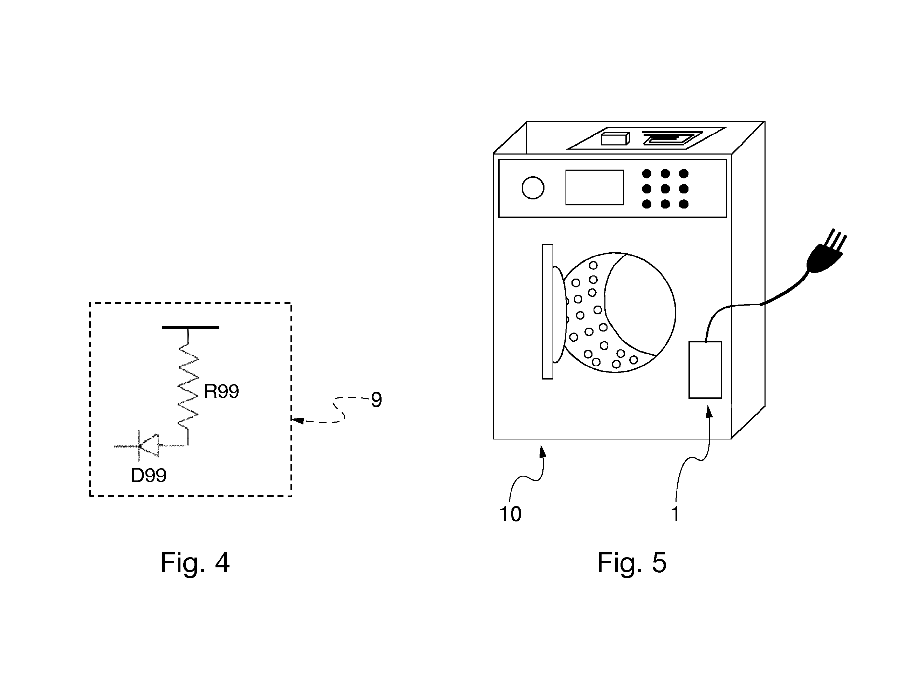

Fig. 4 shows a first embodiment of the circuit of the block diagram shown in Fig. 3.

The first switch of the relay 309 is connected between the first input of the stand-by circuit 100 and the input of the AC-DC converter 4.

The first input 100 of the stand-by circuit 1 is operationally connected to the positive set terminal 303 through the series of a diode D21 and a resistor R39, with the cathode of the diode D21 directed towards the positive set terminal 302.

The second switch 310 of the relay 30 is connected between the negative set terminal 304 and the wake-up switch 6.

The protection block 8 comprises a capacitor C18 and a Zener diode D30 connected in parallel to each other; in particular, the cathode of the diode D30 is connected to the positive set terminal 303, whereas the anode is connected to the negative set terminal 304. Preferably, the diode D30 has a Zener voltage of 12 V.

A protection block 9 comprising a diode D22 is connected to the reset branch.

Fig. 5 shows a second embodiment of the circuit of the block diagram shown in Fig. 3. Unlike the circuit diagram of Fig. 4, the stand-by circuit 1 further comprises the switch 13 connected between the first input of the stand-by circuit 100 and the resistive load RC.

The protection block 8 comprises a capacitor C18 and a Zener diode D30 connected in parallel to each other; in particular, the cathode of the diode D30 is connected to the positive set terminal 303, whereas the anode is connected to the negative set terminal 304. Preferably, the diode D30 has a Zener voltage of 12 V.

A protection block 9 is connected in parallel to the reset branch 306, and comprises a diode D22; in particular, the cathode of the diode D22 is connected to the positive set terminal 303, whereas the anode is connected to the negative set terminal 304.

Fig. 6 shows a third embodiment of the circuit of the block diagram shown in Fig. 3.

Unlike the circuit diagram of Fig. 4, the positive set terminal 302 and the positive reset terminal 307 are short-circuited.

Moreover, the output of the converter 4 is operationally connected to the positive reset terminal 307 through a diode D19 with its cathode directed towards the positive reset terminal 307.

In this embodiment, the second switch 310 of the relay 30 is operationally connected between the first input 100 of the stand-by circuit 1 and the positive set terminal 303. In particular, the second switch is connected between the first input 100 and the series of the resistor R43 and the diode D25.

The protection block 8 comprises a capacitor C18 and a Zener diode D30 connected in parallel to each other; in particular, the cathode of the diode D30 is connected to the positive set terminal 303, whereas the anode is connected to the negative set terminal 304. Preferably, the diode D30 has a Zener voltage of 12 V.

A protection block 9 is connected in parallel to the reset branch 306. The protection block 9 comprises a Zener diode D27 and a capacitor C17 connected in parallel; in particular, the cathode of the diode D27 is connected to the positive set terminal 303, whereas the anode is connected to the negative set terminal 304.

The man skilled in the art may replace one or more of the aforementioned BJT transistors with transistors of different types (e.g. MOSFET, JFET, HEMT, HBT, IGBT, DMOS, etc.), and one or more open collector devices with open drain devices.

With reference to Fig. 7, in all of the above-described embodiments a read circuit 9 for reading the state of the wake-up switch 6 may be connected to the ungrounded terminal of the switch 6. In a preferred embodiment, the read circuit 9 comprises the series of a diode D99 and a resistor R99, the cathode of the diode D99 being connected to the switch 6 and the anode of the diode D99 being connected to the resistor R99, whose other terminal is connected to a fixed voltage higher than the ground voltage. The logic signal indicating the state of the switch 6 (low level if the switch 6 is closed, high level if it is open) can be read, e.g. by the control unit 2, at the connection point between the diode D99 and the resistor R99.

Fig. 8 shows a household appliance 10, in particular a washing machine, that comprises the stand-by circuit 1 according to the present invention.

The examples described so far with reference to Figs. 1-8 must not be considered to be limiting the present invention.

It is also clear that the parts of the stand-by circuit may be mounted on one or more interconnected boards, and that the dimensions of the components of the circuit depend on the specific applications for which it is intended. The stand-by circuit according to the invention is preferably produced by using discrete components, but it is clear that a part thereof may be integrated into a chip.

In a preferred embodiment, which is particularly advantageous when applied to a household appliance, the components of the stand-by circuit 1 have the values listed in the following

**Table 1.**

| Component | Value/code |
|---|---|
| Relay 3 | Panasonic ADJ14012 |
| Relay 30 | Hong Fa HFE7/12-1HD-L2 |
| R46 | 1k Ω |
| D29 | 1N4007 |
| C18 | 220µ F |
| D30 | MMSZ5245 (Vishay) |
| Q21 | BC847 |
| R45 | 4,7k Ω |
| R31 | 10k Ω |
| D19 | 1N4007 |
| D21 | 1N4007 |
| D31 | 1N4007 |
| D22 | 1N4148 |
| C17 | 220µ F |
| D99 | 1N4007 |
| R99 | 10k Ω |

Due to the bistable behaviour of the relay, all of the above embodiments allow to implement a method wherein, at the end of a mains blackout, the relay (3, 30), and hence the household appliance 10 comprising the circuit 1, will resume the state they were in prior to the blackout.

## Claims

1. A stand-by circuit (1) comprising a first input (100) for receiving a phase of a mains supply, a second input (101) for receiving a stand-by signal, and an AC-DC converter (4), said circuit being **characterized in that**
it comprises a bistable relay (3,30) connected between said first input (100) and an input of said AC-DC converter (4), wherein said bistable relay (30) disconnects said first input (100) electrically from said input of said AC-DC converter (4) when there is an active signal at said second input (101).

2. A stand-by circuit (1) according to claim 1, further comprising a wake-up branch (7), wherein said relay (3, 30) comprises a first switch (309) and a second switch (310), said wake-up branch (7) comprising said second switch (310), a first control branch (305), a third switch (6),
said wake-up branch (7) being operationally connected between said first input (100) and the ground,
said first switch (309) being adapted to connect said first input (100) electrically to an input of said AC-DC converter (4) upon energization of said first control branch (305), and to disconnect said first input (100) from said input of said AC-DC converter (4) upon energization of a second control branch (306),
said second switch (310) closing upon energization of said second control branch (306), said stand-by circuit (1) further comprising a reset module (5) adapted to energize said second control branch (306) when there is an active stand-by signal at said second input (101).

3. A circuit (1) according to claim 2, wherein said reset module (5) comprises an output terminal (502) connected to a first terminal (308) of said second control branch (306) and an input terminal (501) connected to said second input (101) of said circuit (1),
wherein an output of said converter (4) is operationally connected to a second terminal (307) of said second control branch (306).

4. A circuit (1) according to claim 3, wherein said output of said converter (4) is operationally connected to a second terminal (307) of said second control branch (306) through at least one diode (D 19).

5. A circuit (1) according to any one of claims 2-4, wherein said first switch (309) and said second switch (310) have one common terminal (300), said common terminal (300) being connected to said first input (100) of said stand-by circuit (1).

6. A circuit (1) according to claim 5, wherein a second terminal (302) of said second switch (310) is operationally connected to a terminal (303) of said first control branch (305), in particular through a diode (D29) and a resistor (R46) connected in series.

7. A circuit (1) according to any one of claims 2-4,
wherein said first input (100) of said stand-by circuit (1) is operationally connected to a first terminal (303) of said first control branch (305) through a diode (D21) and a resistor (R39) connected in series,
wherein a second terminal (304) of said first control branch (305) is operationally connected to said third switch (6) through said second switch (310).

8. A circuit (1) according to any one of claims 2-4,
wherein said first input (100) of said stand-by circuit (1) is operationally connected to a first terminal (303) of said first control branch (305) through the series of said second switch (310), a diode (D25) and a resistor (R43),
wherein a second terminal (304) of said first control branch (305) is connected to said third switch (6).

9. A circuit (1) according to any one of the preceding claims, wherein said circuit (1) further comprises a fourth switch (311) connected between said first input (100) and at least one resistive load (Rc).

10. A circuit (1) according to any one of claims 2-9, further comprising at least one protection block (8, 9) connected in parallel to at least one of said control branches (305, 306), said protection block (8, 9) comprising a diode (D22, D27).

11. A circuit (1) according to any one of claims 2-10, wherein a terminal of said first control branch (305) is connected to a terminal of said second control branch (306).

12. A circuit (1) according to any one of claims 2-11, wherein said third switch (6) is controlled by a push-button.

13. A circuit (1) according to any one of claims 2-12, further comprising a read circuit (9), said read circuit (9) comprising a series of a diode (D99) and a resistor (R99) connected between said third switch (6) and a reference voltage.

14. A household appliance (10) comprising the circuit (1) according to any one of the preceding claims.

15. A method for controlling a household appliance, said household appliance being either in an operating state or in a stand-by state, a lack of supply voltage occurring at a first time instant at an input of the household appliance adapted to be connected to a power supply mains, and the supply voltage being then restored at said input at a second time instant following said first time instant,
said method being **characterized in that**
at said second time instant said household appliance will be in the state it was in at said first time instant.
